Europäisches Patentamt

**European Patent Office**

**Office européen des brevets**

(19)

(11) Publication number: **0 132 109**
**A1**

(12) **EUROPEAN PATENT APPLICATION**

(21) Application number: **84304714.3**

(22) Date of filing: **11.07.84**

(51) Int. Cl.⁴: **H 04 N 3/08**
**H 04 N 5/21, H 04 N 5/33**

(30) Priority: **15.07.83 GB 8319144**

(43) Date of publication of application:
**23.01.85 Bulletin 85/4**

(84) Designated Contracting States:
**AT BE CH DE FR IT LI LU NL SE**

(71) Applicant: **MARCONI AVIONICS LIMITED**
**Airport Works**
**Rochester Kent ME1 2XX(GB)**

(72) Inventor: **Cuthbertson, Glenn Mcpherson**
**29 Belgrave Road**
**Queen's Park Billericay Essex(GB)**

(74) Representative: **Hoste, Colin Francis et al,**
**The General Electric Company p.l.c. Central Patent**
**Department (Chelmsford Office) Marconi Research**
**Centre West Hanningfield Road**
**Great Baddow Chelmsford CM2 8HN, Essex(GB)**

(54) **Electro-optical imaging system.**

(57) An electro-optical imaging system includes a scanning head, comprising a rotating polygon mirror to sequentially image different points in the field of view on to a detector compensation for vibration in the azimuth direction, i.e. the direction in which the scanning head rotates, is provided by utilising a signal derived from a vibration sensor to alter the gating period during which the video output system from the detector is output. Compensation is also provided for vibration occurring in the vertical direction.

FIG. 2.

PATENT  SPECIFICATION

## Electro-Optical Imaging System

This invention relates to electro-optical imaging systems, and is particularly concerned with the effect of vibration upon such a system, as vibration can result in severe blurring of the image, which can seriously degrade the information content of a viewed scene and the video signals which are derived from it.

It has been proposed to compensate for vibration by applying an appropriate deflection field to photo electrons which are produced at a photo sensitive image receiving surface, but such techniques are difficult and expensive to implement and are obviously impracticable for detectors which do not produce free electrons in response to illumination.  The present invention seeks to provide an improved system which is particularly applicable to photo detectors having a very rapid response, i.e. which do not exhibit an appreciable integration effect.

According to this invention, an electro-optical imaging system includes an electro-optical sensor arrangement for producing a video signal representative of a series of line scans of a viewed scene; means for detecting vibration of said system in at least the line scan direction; and means for gating out for utilisation a selected portion of the video signal relating to each line scan so as to compensate for said vibration.

The invention is further described by way of example with reference to the accompanying drawings, in which:

Figure 1 illustrates in diagramatic fashion the optical arrangement of the electro-optical imaging system of this invention,

Figure 2 is a perspective view of an imaging device,

Figure 3 illustrates the invention in functional diagramatic form, and

Figures 4 and 5 are explanatory diagrams.

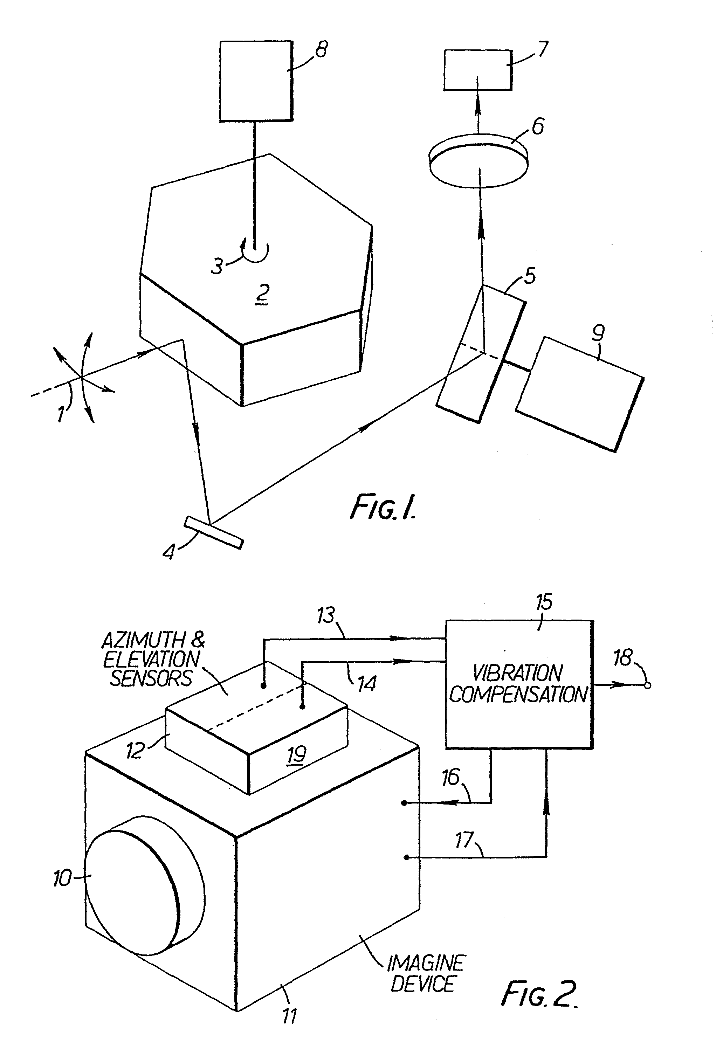

Referring to Figure 1, the invention enables a two-dimensional field of view to be scanned point by point to enable a two-dimensional image to be built up. The invention is particularly applicable to infra-red imaging systems in which large two-dimensional detectors are not readily available. In order to form an image of a large two-dimensional field of view, it is customary to scan the field of view across a point detector (or possibly a small number of adjacent point detectors), on a line-by-line basis using a polygon mirror rotating at high speed. Movement of the image in the vertical, or field, direction is obtained by means of a flapping, or oscillating, mirror. By an analogy with a television raster pattern the rotating polygon generates the horizontal line scans, whereas the action of the flapping mirror is to move the line scan progressively vertically down the field of view in what is normally termed the field direction.

If the imaging system is subject to vibration, the effect on the video signal from which the image is reconstituted can be quite severe, resulting in blurring or distortion of the field of view which greatly degrades the information content. The invention enables the effect of vibration occurring in the line direction to be greatly reduced, or even eliminated altogether under favourable circumstances. It also permits vibration occurring in the vertical or field direction to be reduced to a significant extent.

Referring to Figure 1 in more detail, thermal radiation is received in the direction represented by line 1 and falls upon a facet of a six-sided mirror polygon 2 which is rotated rapidly and continuously in the direction indicated by the arrow 3. Each of the six facets has a highly polished mirror surface which reflects the incident illumination on to a pupil transfer optics 4, represented diagramatically in the drawing.

These optics transfer the pupil image on to a flapping mirror 5 which transfer the image via a further focussing optics 6 on to a localised detector 7.

The mirror 2 is rotated under the action of a small motor 8 and similarly the mirror 5 is oscillated backwards and forwards in the required flapping manner by a torque motor 9. Whereas the action of the motor 8 is to rotate the polygon 2 continuously at a nominally constant speed in the same sense so as to achieve scanning of the field of view in the horizontal or line direction, the action of the motor 9 is to move the mirror 5 smoothly and precisely over a predetermined angle which corresponds to the vertical height of field of view, and then to rapidly return it to its initial position to repeat the process. By correctly synchronising the operation of the two mirrors a systematic and regular scanning of a large two-dimensional field of view can be achieved so that the detector 7 views each point of the field of view in turn. The detector 7 generates a video signal in the manner of a television signal which is representative of this sequential scanning of the field of view.

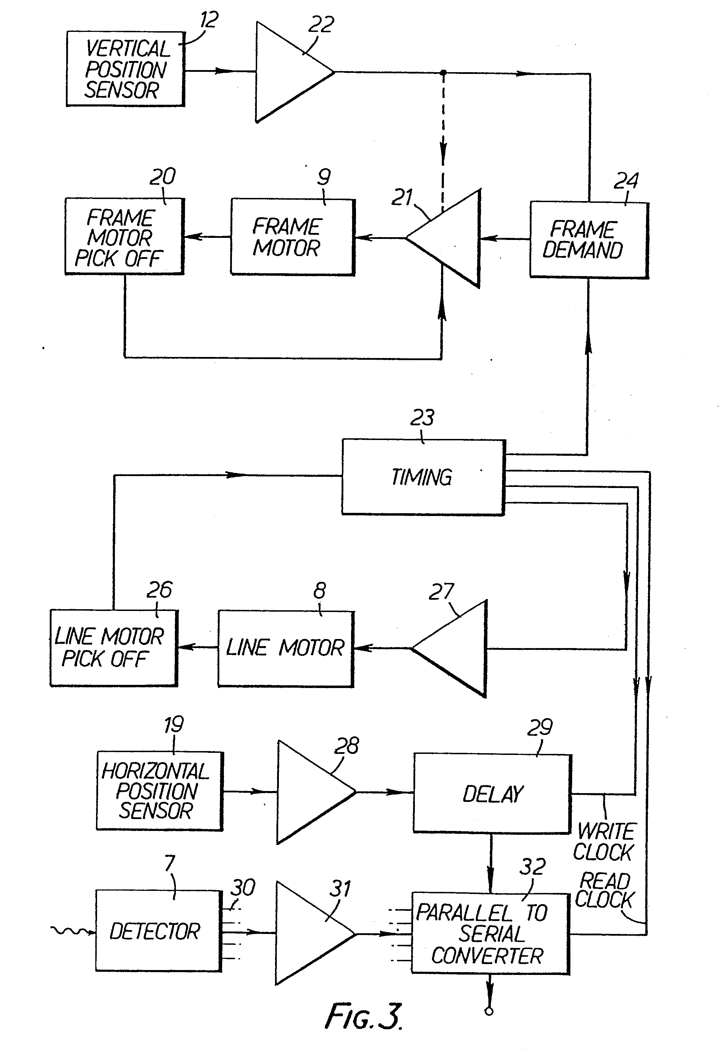

Figure 2 shows the imaging device which incorporates the arrangement of Figure 1. The input optical aperture is represented at 10, and the remainder of the imaging device is enclosed within the housing 11. Azimuth and elevation sensors 12 and 19 are mounted rigidly on top of the housing 11. The sensors themselves are conventional devices. Information representative of vibration in elevation and azimuth is fed over lines 13 and 14 to a vibration compensation circuit 15. This circuit, which is described in more detail subsequently with reference to Figure 3 provides a feedback signal over lead 16 which permits a considerable degree of compensation to be provided for elevation, i.e. "vertical", vibration.

The video signal representative of the information generated by the imaging device is output on line 17 and is fed to the vibration compensation circuit 15 where the effect of azimuth, i.e. "horizontal", vibration is largely removed, and a compensated video signal is made available at output terminal 18.

Referring to Figure 3, the motor 9 forms part of a feedback loop which includes a frame motor pick-off circuit 20 which generates information which is fed back to the frame motor drive circuit 21. The pick-off circuit 20 is associated with the mirror 5, and motor 9, and enables precise information about its current position to be made available so that the necessary corrections can be made to compensate for any errors which arise if it departs from a predetermined motion. The elevation sensor 12 makes its output available over lead 13 to an amplifier 22, the output of which is fed either directly to the drive circuit 21, which directly drives the motor 9, so as to provide immediate compensation for any vibration which occurs in the elevation of vertical sense, or alternatively, it is fed into a frame demand circuit 24 which is triggered by means of a frame synchronisation pulse obtained from a central timing circuit 23. Thus, in this latter alternative, the instant at which the frame synchronisation pulse is applied to restart the cyclic motion of the mirror 5 is modified by the signal applied to the frame demand circuit 24 from the amplifier 22.

The line motor 8 is subject to a closed feedback control to which compensation for vibration is not directly applied. The line motor 8 drives a rotating mirror 2 which is optically coupled to a motor pick-off device 26 so that the mirror's instantaneous position is known. An output from the pick-off circuit 26 is fed back to the timing circuit 23 so as to synchronise the overall operation of the optical scanning system. Output from the timing circuit 23 is made available via a drive amplifier 27 so as to cause the motor 8 to rotate continuously at precisely the required speed.

Horizontal position sensor 19 which is mounted on the imaging device 11 generates an output representative of the azimuth vibration and this is fed via an amplifier 28 to a variable delay circuit 29.

The detector 7 receives the radiation which falls upon it and generates an output video signal on a multiplicity of leads 30. In practice, the detector 7 would consist of a number of individual detectors mounted closely adjacent to each other connected so as to simultaneously scan a number of adjacent parallel lines, from which a TV compatable picture will subsequently be reconstructed. The detector outputs are sampled and stored in parallel in a memory device, which is constituted by the parallel to serial converter 32, under control of a gated clock signal (write clock), produced by the timing circuit 23. The stored information for each of the detectors is then read out from the memory device of converter 32 in sequence under control of a second gated clock signal (read clock) to provide a serial TV video signal. The time at which the write clock is gated on is varied in accordance with the polygon mirror pick-off signal generated by the pick-off device 26 in order to compensate for variations in polygon rotational speed. The time at which the write clock signal is gated on and applied to the converter 32 is varied in accordance with the output signal from the sensor 19, via the delay circuit 29, in order to substantially compensate for the effects of azimuth vibrations without the need to modify the rotational speed of the polygon mirror 2.

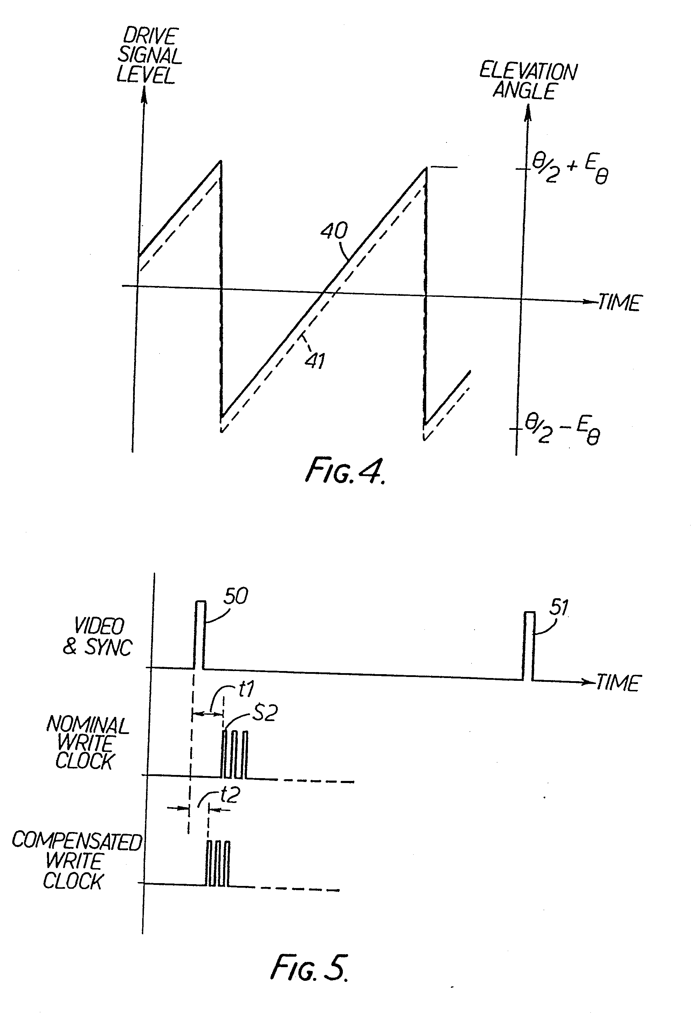

Referring to Figure 4, the operation of the motor 9 is explained in more detail. The mirror 5 oscillates in accordance with a saw-tooth waveform, that is to say, it moves steadily and relatively slowly over a particular angle corresponding to the degree of movement required in the field direction, after which it reverts rapidly during its fly-back period to its initial position so as to repeat the sequence. The nominal position of the saw-tooth waveform (shown in solid line 40), is shifted in amplitude by an angle $E_\theta$ (shown in broken line 41) by means of the control signal generated by the amplifier 22 and applied directly to the amplifier 21. Alternatively, the position of the waveform can be shifted in time by applying the control signal to the frame demand circuit 24.

Figure 5 illustrates the way in which the delay circuit 29 modifies the instant of occurrence of the line period of the video signal. The top line of Figure 5 illustrates a video signal having two line sync pulses 50 and 51, between which the video signal is present. The actual position of the information varies in time in accordance with the azimuth vibration and by delaying or advancing the write clock signal 52 with respect to a sync pulse, the position of the line of video information can be in effect moved to the left or right in a manner which exactly cancels the super-imposed vibration. Thus, the initial delay tl is altered to t2 so as to compensate - the value of the delay will, of course, alter rapidly on a line to line basis in accordance with the imposed vibration.

Although by this means the azimutn vibration can be almost entirely eliminated within a given bandwidth, the degree of cancellation which can be provided for elevation vibration is somewhat less, since it is dependent on the inertia of the oscillating mirror 5.

It will be appreciated that the provision of the compensation for vibration increases the angular field of view over which the two mirrors are required to scan. This can lead to vignetting of the scan mechanism, and for some purposes this may be quite acceptable. Alternatively, the angular scan available to the mirrors can be increased by an amount necessary, as compared with a conventional system in which no vibration compensation is provided within the scanning head itself.

Alternatively, the same mechanism can be used over a reduced scan angle, and the remaining unvignetted angular range used for vibration compensation.

Claims

1. An electro-optical imaging system including an electro-optical sensor arrangement for producing a video signal representative of a series of line scans of a viewed scene; means for detecting vibration of said system in at least the line scan direction; and means for gating out for utilisation a selected portion of the video signal relating to each line scan so as to compensate for said vibration.

2. A system as claimed in claim 1 and wherein a rotatable polygon mirror is used to image a series of the line scans sequentially on to said detector.

3. A system as claimed in claim 2 and wherein a vibration sensor is mounted in close proximity to said mirror so as to detect vibration in the line scan direction.

4. A system as claimed in claim 3 and wherein the output of said sensor is utilised to vary the delay, with respect to a synchronisation pulse, of that portion of the video signal which is gated out for utilisation.

5. A system as claimed in claim 1 and wherein an oscillating or flapping mirror is used to shift the series of line scans in a substantially perpendicular direction (the field direction).

6. A system as claimed in claim 5 and wherein a second vibration sensor is mounted in close proximity to said oscillating mirror so as to detect vibration in the field direction.

7. A system as claimed in claim 6 and wherein the output of said second sensor is utilised to modify the movement of said oscillating mirror so as to compensate for said vibration.

FIG. 1.

AZIMUTH & ELEVATION SENSORS

VIBRATION COMPENSATION

IMAGINE DEVICE

FIG. 2.

Fig.3.

Fig.4.

Fig.5.

## DOCUMENTS CONSIDERED TO BE RELEVANT

EP 84304714.3

| Category | Citation of document with indication, where appropriate, of relevant passages | Relevant to claim | CLASSIFICATION OF THE APPLICATION (Int Cl 4) |
|---|---|---|---|
| A | EP - A2 - 0 083 219 (HONEYWELL) <br> * Abstract; fig. 1; page 2, line 11 - page 3, line 8 * <br><br>---- | 1-3, 5-7 | H 04 N 3/08 <br> H 04 N 5/21 <br> H 04 N 5/33 |

**TECHNICAL FIELDS SEARCHED (Int. Cl.4)**

H 04 N 3/00

H 04 N 5/00

The present search report has been drawn up for all claims

| Place of search | Date of completion of the search | Examiner |
|---|---|---|
| VIENNA | 03-10-1984 | BENISCHKA |